# EUROPÄISCHE PATENTSCHRIFT

(11) **EP 2 414 151 B1**
(45) Veröffentlichungstag und Bekanntmachung des Hinweises auf die Patenterteilung: **15.06.2016**
(21) Anmeldenummer: 10717523.4
(22) Anmeldetag: 31.03.2010
(51) Int. Cl.: B29C 67/00

(54) **TRANSPORTCONTAINER**
TRANSPORT CONTAINER
CONTENEUR DE TRANSPORT

(30) Priorität: 31.03.2009 DE 102009015130
(43) Veröffentlichungstag der Anmeldung: 08.02.2012
(73) Patentinhaber: Sintermask GmbH, 92331 Lupburg (DE)
(72) Erfinder: FRUTH, Carl, 92331 Parsberg (DE)
(74) Vertreter: Schneider, Andreas
(86) Internationale Anmeldenummer: PCT/EP2010/002066
(87) Internationale Veröffentlichungsnummer: WO 2010/112213

(56) Entgegenhaltungen:
- EP-A2- 1 704 989
- WO-A1-01/07239
- WO-A1-02/36330
- WO-A1-2007/003244
- DE-A1-102004 057 865
- US-A1- 2006 022 379

## Beschreibung

Die Erfindung betrifft einen Transportcontainer. Darüber hinaus betrifft die Erfindung eine einen solchen Transportcontainer aufweisende Vorrichtung zum Herstellen eines dreidimensionalen Objektes durch selektives Verfestigen eines schichtweise aufgetragenen Aufbaumaterials sowie ein Verfahren zur Herstellung eines dreidimensionalen Objektes mittels einer solchen Vorrichtung.

Schichtbauverfahren dienen zur Herstellung von schichtweise aufgebauten Bauteilen aus verfestigbarem Material, wie Harz, Kunststoff, Metall oder Keramik und werden beispielsweise zur Fertigung von technischen Prototypen verwendet.

Aus dem Stand der Technik sind Vorrichtungen zur Herstellung eines dreidimensionalen Objektes durch selektives Verfestigen eines schichtweise aufgetragenen Aufbaumaterials, wobei solche Vorrichtungen eine im Betriebszustand geschlossene Prozeßkammer aufweisen, in der das dreidimensionale Objekt schichtweise aufgebaut wird. Die Prozeßkammer wird auch als Baukammer oder Bauraum bezeichnet. Anlagen, mit denen ein solches Schichtbauverfahren durchgeführt wird, werden auch als Rapid Prototyping-Systeme bezeichnet.

Bei einem Schichtbauverfahren werden Schichten eines Aufbaumaterials sukzessive übereinander aufgetragen. Vor dem Auftragen der jeweils nächsten Schichten werden die dem zu fertigenden Objekt entsprechenden Stellen in den jeweiligen Schichten selektiv verfestigt. Das Verfestigen erfolgt beispielsweise durch lokales Erhitzen eines pulverförmigen Schichtrohmaterials. Hierfür kommt beispielsweise eine Strahlungsquelle zum Einsatz. Indem gezielt Strahlung in geeigneter Weise in die gewünschten Bereiche eingebracht wird, kann dabei eine exakt definierte, beliebig geartete Objektstruktur erzeugt werden. Dabei ist auch die Schichtdicke einstellbar. Ein solches Verfahren ist insbesondere zur Herstellung von dreidimensionalen Körpern verwendbar, indem mehrere dünne, individuell gestaltete Schichten aufeinanderfolgend erzeugt werden. Beschrieben wird ein solches Schichtbauverfahren beispielsweise in dem Patent EP 1015214 B1.

Für den Einsatz von Schichtbauverfahren zur additiven Fertigung von Bauteilen sind effiziente Prozeßabläufe notwendig. Dies betrifft sowohl die Laufzeit der Schichtbauanlagen, als auch die Fertigbearbeitung der in den Schichtbauanlagen aufgebauten Bauteile. Ein Problem bei der Fertigbearbeitung von Objekten, die in einer Schichtbauanlage erzeugt wurden, ist beispielsweise die Abkühlung der Objekte nach dem Schichtaufbauprozeß.

In der Patentanmeldung WO00/21736, betreffend eine Laser-Sintermaschine, wird vorgeschlagen, das schichtweise erzeugte Objekt auf einer Aufbauplattform zu erzeugen, die in einen Wechselbehälter angeordnet ist. Der Wechselbehälter kann nach dem Öffnen einer Entnahmetür aus dem Bauraum entnommen werden und außerhalb der Sintermaschine abkühlen. Unmittelbar nach dem Entnehmen des Wechselbehälters kann ein neuer Wechselbehälter in die Sintermaschine eingesetzt werden. Damit lassen sich die Standzeiten zwischen zwei Bauprozessen gegenüber einem herkömmlichen Verfahren, bei dem die Abkühlung des Objektes in der Sintermaschine erfolgt, verkürzen. Die Sintermaschine steht nach einer Umrüstzeit von etwa 15 bis 20 Minuten für den nächsten Einsatz zur Verfügung. Das Entnehmen und Einsetzen der Wechselbehälter erfolgt dabei in einer besonders aufwendigen Art und Weise, nämlich entweder manuell oder mit Hilfe eines Hubwagens. Darüber hinaus werden verschiedenste Ausgleichs-, Zentrier-, Klemm- und Schwenkmechanismen benötigt, die für das ordnungsgemäße An- und Abkoppeln des Wechselbehälters an eine Trägervorrichtung erforderlich sind. Dadurch ist auch der konstruktive Aufwand vergleichsweise hoch.

In der Patentanmeldung DE 10 2006 055 077 A1 wird eine Lasermaschine beschrieben, bei der ein solcher Wechselbehälter zum Einsatz kommt. Die Handhabung des Wechselbehälters ist gegenüber der oben beschriebenen Lösung dahingehend vereinfacht, daß für einen Austausch des Wechselbehälters kein Eingreifen in den Bauraum mehr notwendig ist. Der Wechselbehälter ist zu diesem Zweck an einer Bauraumtür ankoppelbar und wird beim Öffnen und Schließen der Bauraumtür nach außen bzw. innen geschwenkt. Die Wechselposition ist nun gut zugänglich. Der Wechselbehälter muß nicht mehr aus dem Bauraum herausgehoben werden. Allerdings ist das An- und Abkoppeln des Wechselbehälters nach wie vor sehr aufwendig, da einerseits der Wechselbehälter vor Inbetriebnahme der Sintermaschine stets von der Bauraumtür getrennt und mit einem Antrieb zur Höhenverstellung der Plattform verbunden werden muß und andererseits vor dem Behälterwechsel erst die Verbindung zwischen Wechselbehälter und Antrieb getrennt und die Verbindung von Wechselbehälter und Bauraumtür hergestellt werden muß, damit der Behälter beim Öffnen der Bauraumtür auch tatsächlich herausschwenkt.

Klassische Systeme mit Wechselbehälter sind auch in WO 02/36330 A1, DE102004057865 A1 und WO 2007/003211 A1 beschrieben.
In EP 1 704 989 A2 ist eine Lasersinteranlage mit einem als Wechselbehälter ausgebildeten Bauzylinder beschrieben. Der Bauzylinder wird von einem als Baukammer bezeichneten Trägerelement getragen, das relativ zu einer Betriebskammer der Lasersinteranlage positionierbar ist.
Eine Aufgabe der vorliegenden Erfindung ist es, ein solches Schichtbauverfahren noch effektiver zu gestalten.
Diese Aufgabe wird durch einen Transportcontainer nach Anspruch 1 bzw. eine Vorrichtung nach Anspruch 7 bzw. ein Verfahren nach Anspruch 10 gelöst.
Der erfindungsgemäße Transportcontainer zur Verwendung in bzw. mit einer Vorrichtung zur Herstellung eines dreidimensionalen Objektes durch selektives Verfestigen eines schichtweise aufgetragenen Aufbaumaterials, wobei die Vorrichtung eine im Betriebszustand geschlossene Prozeßkammer aufweist, in der das dreidimensionale Objekt schichtweise erzeugt wird, ist dadurch gekennzeichnet, daß der Transportcontainer einen Behälter aufweist, in dem eine höhenverstellbare Plattform angeordnet ist, auf der das dreidimensionale Objekt schichtweise erzeugt wird, und daß der Transportcontainer als ein zweiter Teilbereich der Prozeßkammer ausgebildet ist, der von einem ersten Teilbereich der Prozeßkammer abteilbar, im abgeteilten Zustand unabhängig von der Vorrichtung handhabbar und zur Herstellung des Betriebszustandes der Vorrichtung mit dem ersten Teilbereich der Prozeßkammer verbindbar ist. Der Transportcontainer weist einen an einer Kontaktseite des Transportcontainers angebrachten und eine Öffnung des Behälters umgreifenden Flansch als Verbindungselement zur Herstellung einer mechanischen Verbindung zu dem ersten Teilbereich der Prozeßkammer auf.

Die erfindungsgemäße Vorrichtung zum Herstellen eines dreidimensionalen Objektes weist eine im Betriebszustand geschlossene Prozeßkammer auf, in der das dreidimensionale Objekt hergestellt wird, und ist dadurch gekennzeichnet, daß die Prozeßkammer einen ersten Teilbereich und einen als Transportcontainer wie oben beschrieben ausgebildeten zweiten Teilbereich aufweist. Bei der Vorrichtung handelt es sich insbesondere um eine Vorrichtung zum Herstellen eines dreidimensionalen Objektes durch selektives Verfestigen eines schichtweise aufgetragenen Aufbaumaterials.

Das erfindungsgemäße Verfahren zur Herstellung eines dreidimensionalen Objektes mittels einer Vorrichtung, wobei die Vorrichtung eine im Betriebszustand geschlossene Prozeßkammer aufweist, in der das dreidimensionale Objekt hergestellt wird, ist dadurch gekennzeichnet, daß ein Transportcontainer, wie oben beschrieben, nach der teilweisen oder vollständigen Erzeugung des Objektes von einem ersten Teilbereich der Prozeßkammer abgeteilt und im abgeteilten Zustand unabhängig von der Vorrichtung gehandhabt wird. Bei der Vorrichtung handelt es sich insbesondere um eine Vorrichtung zum Herstellen eines dreidimensionalen Objektes durch selektives Verfestigen eines schichtweise aufgetragenen Aufbaumaterials.

Unter der Herstellung des Objektes wird dabei nicht nur das Erzeugen des Objektes im engeren Sinne verstanden. Vielmehr umfaßt die Herstellung des Objektes auch einzelne Prozeßschritte vor und/oder nach dem Schichtaufbau und dem selektiven Verfestigen, wie beispielsweise eine Veränderung, Behandlung, Weiter- und/oder Fertigbearbeitung der erzeugten Objekte, beispielsweise eine Temperaturbehandlung, wie ein Abkühlen, eine Behandlung unter Verwendung einer geänderten Prozeßumgebung, eine mechanische Behandlung und anderes. Unter der Prozeßkammer wird somit nicht nur eine Baukammer, in welcher der Aufbau eines Objektes stattfindet, verstanden, sondern beispielsweise auch ein Bearbeitungsraum, ein Kühlraum etc.

Vorteilhafte Ausführungen der Erfindung sind in den Unteransprüchen angegeben.

Die im Folgenden im Zusammenhang mit dem Verfahren erläuterten Vorteile und Ausgestaltungen gelten sinngemäß auch für die erfindungsgemäßen Vorrichtungen und umgekehrt.

Das aus dem Stand der Technik bekannte Konzept des Wechselbehälters wird nicht mehr weiterverfolgt, da es sich in der Praxis als zu aufwendig und damit als untauglich für eine Massenproduktion von Objekten mittels Schichtbauverfahren erwiesen hat.

Eine Kernidee der Erfindung ist es statt dessen, einen Teil der Prozeßkammer selbst als austauschbaren Transportcontainer für die erzeugten Objekte zu verwenden. Hierzu ist ein Abschnitt der Prozeßkammer von der übrigen Prozeßkammer abtrennbar und separat handhabbar ausgeführt. Der Transportcontainer ist dann besonders einfach transportierbar. Vorzugsweise läßt sich das Austauschen und Transportieren der Transportcontainer automatisieren, so daß eine sehr effektive Erzeugung von Objekten, insbesondere auch eine Massenfertigung, möglich ist.

Wird der Transportcontainer als weitgehend autonome Einheit ausgeführt, umfaßt der Transportcontainer insbesondere auch den Antrieb für die Höhenverstellung der Plattform, so entfällt das An- und Abkoppeln an den Antrieb, wodurch sich der Handhabungsaufwand gegenüber den vorbekannten Lösungen nochmals deutlich verringert. Durch eine fest integrierte Mechanik zur Höhenverstellung erhöht sich zugleich die Genauigkeit bei der Herstellung der Objekte, da das An- und Abkoppeln des Behälters an die Mechanik entfällt.

Die Erfindung umfaßt nicht nur den auch weiter unten beschriebenen Fall, daß der Behälter, in dem die Plattform angeordnet ist, in einer Art Hülle angeordnet ist, die als Prozeßkammerbegrenzung dient, sondern auch den Fall, daß der Behälter selbst als austauschbarer Transportcontainer ausgebildet ist, mit anderen Worten die Behälterwände als Prozeßkammerbegrenzung dienen. In jedem Fall ist das Ankoppeln des Transportcontainers die Voraussetzung dafür, daß der Betriebszustand der Vorrichtung hergestellt werden kann. Mit anderen Worten kann erst nach dem Ankoppeln des Transportcontainers mit dem Erzeugen der Objekte begonnen werden, da die Plattform, auf der das Objekt aufgebaut wird, in dem Behälter angeordnet ist, der sich in dem Transportcontainer befindet.

Die Erfindung ist universell bei beliebigen Schichtbauverfahren anwendbar. Von Vorteil ist insbesondere, daß die Prozeßkammer trotz des separat handhabbaren Transportcontainers im Betriebszustand mit einem von dem Umgebungsdruck abweichenden Betriebsdruck (Unterdruck oder Überdruck) betrieben werden kann, da die Prozeßkammer nach dem Abkoppeln des Transportcontainers wieder nach außen abgeschlossen ist.

Mit der vorliegenden Erfindung entfällt das aufwendige Entnehmen der Wechselbehälter mit einem Hubwagen.

Von Vorteil ist darüber hinaus, daß sich nach dem Entfernen des Transportcontainers eine vergleichsweise große Öffnung der Prozeßkammer ergibt, durch die eine im Vergleich zu aus dem Stand der Technik bekannten Lösungen einfache Reinigung der Prozeßkammer möglich ist.

Vorteilhaft ist darüber hinaus, daß eine Entnahmetür nicht erforderlich ist. Dadurch entfällt nicht nur die aufwendige Abdichtung der Tür. Zudem wird auch kein Bedienungsraum zum Öffnen der Tür außerhalb der Anlage benötigt.

Da in der Prozeßkammer zum einen kein Platz für das An- und Abkoppeln eines Wechselbehälters vorgesehen werden muß und zum anderen auch keine Freiräume zur Entnahme eines Wechselbehälters vorgesehen sein müssen und zum dritten in einer bevorzugten Ausführungsform der Erfindung auch kein Platz für das An- und Abkoppeln der Mechanik für die Höhenverstellung der Plattform vorgesehen sein muß, kann die Prozeßkammer im Vergleich zu herkömmlichen Systemen sehr viel kompakter ausgeführt werden, wodurch die Gesamtgröße einer Schichtbauvorrichtung deutlich verringert werden kann.

Ein weiterer Vorteil liegt in der einfacheren Handhabung gegenüber den aus dem Stand der Technik bekannten Wechselbehältern, wenn das Schichtbauverfahren bei erhöhten Temperaturen stattfindet, da die bisher verwendeten Wechselbehälter sehr heiß waren, was die Handhabung sehr erschwerte, während die von der Erfindung vorgeschlagenen Transportcontainer durch ihre Wandung nach außen thermisch isoliert sind und daher wesentlich einfacher gehandhabt werden können.

Insgesamt können durch die vorliegende Erfindung Schichtbauverfahren noch effektiver gestaltet werden.

Ein Ausführungsbeispiel der Erfindung wird nachfolgend anhand der Zeichnungen näher erläutert. Hierbei zeigen:
- Fig. 1: eine schematische Darstellung einer Vorrichtung mit Transportcontainer während einer Objekterzeugung,
- Fig. 2: eine schematische Darstellung einer Vorrichtung mit gefülltem Transportcontainer vor dem Abkoppeln,
- Fig. 3: eine schematische Darstellung einer Vorrichtung mit abgekoppeltem Transportcontainer.

Sämtliche Figuren zeigen die Erfindung lediglich schematisch und mit ihren wesentlichen Bestandteilen. Gleiche Bezugszeichen entsprechen dabei Elementen gleicher oder vergleichbarer Funktion.

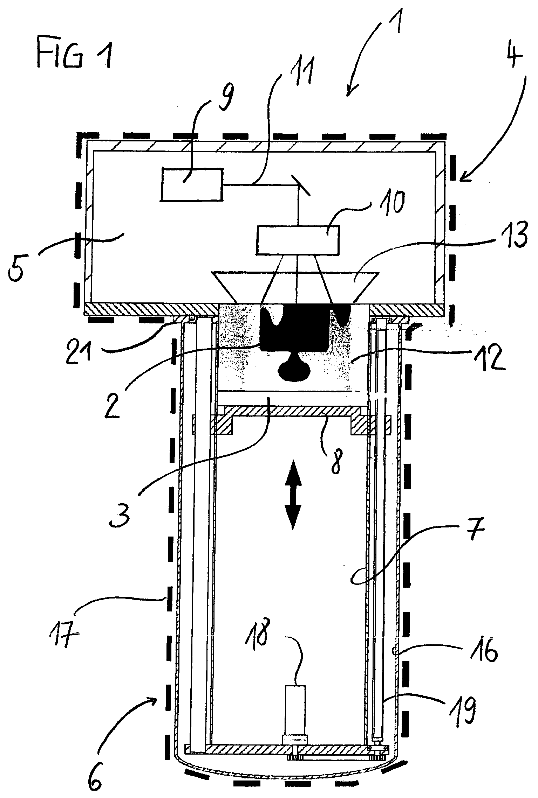

Die Erfindung kann sowohl in Vorrichtungen mit, als auch in Vorrichtungen ohne Verwendung einer Strahlungsquelle eingesetzt werden. Fig. 1 zeigt eine Vorrichtung 1 zum Herstellen eines dreidimensionalen Objektes 2 durch selektives Verfestigen eines auf ein plattenförmiges Substrat 3 schichtweise aufgetragenen Aufbaumaterials unter Verwendung einer Strahlungsquelle, beispielsweise eines Lasers. Die Vorrichtung 1 weist eine im Betriebszustand geschlossene Baukammer 4 auf, in der das dreidimensionale Objekt 2 schichtweise erzeugt wird. Die Baukammer 4 weist einen ersten Teilbereich 5 und einen als Transportcontainer 6 ausgebildeten zweiten Teilbereich auf. Der Transportcontainer 6 weist einen Behälter 7 auf, in dem eine höhenverstellbare Aufbauplattform 8 angeordnet ist, auf der das dreidimensionale Objekt 2 schichtweise erzeugt wird. In dem hier gezeigten Beispiel erfolgt eine schrittweise Beschichtung eines Trägersubstrates 3, welcher auf der Plattform 8 aufliegt. Es ist jedoch ebenso möglich, das Objekt 2 direkt auf der Plattform 8 aufzubauen, wobei dann die Plattform 8 als Substrat dient.

Der Aufbau des Objektes 2 erfolgt unter Verwendung eines im oberen Bereich der Baukammer 4 angeordneten und in Fig. 1 schematisch dargestellten Lasers 9, dessen Scanner 10 den Laserstrahl 11 ablenkt und auf die Plattform 8 bzw. auf das darauf geschichtete Sintermaterial 12 fokussiert. Das Sintermaterial 12 wird zu diesem Zweck schichtweise auf das Substrat 3 aufgetragen. Hierzu dient ein ebenfalls nur schematisch dargestellter Beschichter 13. Auf die Einzelheiten dieser Bauelemente wird nachfolgend nicht näher eingegangen, da sie einerseits dem Fachmann bekannt sind und andererseits die besondere Ausgestaltung des Schichtbauverfahrens für die vorliegende Erfindung nicht ausschlaggebend ist. So kann beispielsweise anstelle eines Lasers 9 auch eine andere Strahlungsquelle, beispielsweise ein Infrarotstrahler, zum Einsatz kommen. Die Strahlungsquelle kann dabei auch außerhalb der Baukammer 4 angeordnet sein, wobei sie beispielsweise durch einen für die verwendete Wellenlänge transparenten Bereich in die Baukammer 4 eingekoppelt wird.

Der Transportcontainer 6 ist von dem ersten Teilbereich 5 der Baukammer 4 abteilbar, im abgeteilten Zustand unabhängig von der Vorrichtung 1 handhabbar und zur Herstellung des Betriebszustandes der Vorrichtung 1 mit dem ersten Teilbereich 5 der Baukammer 4 (wieder) verbindbar. Der erste Teilbereich 5 der Baukammer 4 weist zu diesem Zweck eine Öffnung 14 auf, die mit der kontaktseitigen Öffnung 15 des in dem Transportcontainer 6 angeordneten Behälters 7 korrespondiert. Die Wandung 16 des Transportcontainers 6 dient im angekoppelten Zustand als Baukammerabgrenzung. Die Begrenzung 17 der vollständigen Baukammer 4 im Betriebszustand ist in Fig. 1 schematisch mit durchbrochener Linie dargestellt. Eine mit Hilfe von drei Trägern realisierte Dreipunktlagerung (nicht abgebildet) garantiert einen stabilen Stand der Vorrichtung 1, unabhängig davon, ob der Transportcontainer 6 an- oder abgekoppelt ist.

Der Transportcontainer 6 weist eine Einrichtung zur Höhenverstellung der Plattform 8 auf. Damit wird die Plattform 8 nach der Erzeugung jeder Schicht um einen entsprechenden Weg in dem schachtförmigen Behälter 7 vertikal nach unten verfahren. Die Einrichtung zur Höhenverstellung umfaßt einen elektromotorischen Antrieb 18 und eine mit dem Antrieb 18 einerseits und der Plattform 8 andererseits verbundene Höhenverstellmechanik 19. Antrieb 18 und Mechanik 19 sind vollständig in dem Transportcontainer 6 enthalten, so daß die Einrichtung zur Höhenverstellung der Plattform 8 mit dem Transportcontainer 6 eine gemeinsam handhabbare bauliche Einheit bildet.

Der Transportcontainer 6 ist im abgekoppelten Zustand bis auf eine mit Form und Größe des Behälters 7 korrespondierenden Öffnung 15 an seiner kontaktseitigen Oberseite 20 geschlossen. Zum Verbinden des Transportcontainers 6 mit der restlichen Baukammer 5 weist der Transportcontainer 6 Verbindungselemente zur Herstellung einer mechanischen Verbindung auf. Besonders vorteilhaft ist es, wenn diese Verbindungselemente zugleich als Dichtungselemente ausgebildet sind zur Ausbildung einer zur Umgebung hin druckdichten Verbindung zwischen Transportcontainer 6 und erstem Teilbereich 5 der Baukammer 4. Herrscht in der Baukammer 4, wie dies bei einer bevorzugten Ausführungsform der Erfindung der Fall ist, ein von dem Umgebungsdruck abweichender Betriebsdruck vor (beispielsweise ein Druck zwischen 0 und 6 Bar), dienen die Verbindungselemente dazu, daß mit der Herstellung der mechanischen Verbindung zugleich auch eine Abdichtung der Baukammer 4 gegenüber der Umgebung erfolgt. Als Verbindungselement kommt beispielsweise ein abdichtender Flansch 21 zur Anwendung. Der an der Kontaktseite 20 des Transportcontainers 6 angebrachte und die Öffnung 15 des Behälters 7 umgreifende Flansch 21 dichtet dabei die Verbindung zu dem ersten Baukammerteilbereich 5 druckdicht ab. Dabei spielt es keine Rolle, ob sich in dem Bauraum 4 ein Arbeits- oder Schutzgas oder aber Luft bzw. ein Vakuum befindet. Zusätzlich zu den Verbindungselementen 21 an dem Transportcontainer 6 und korrespondierenden, mit den Verbindungselementen 21 des Transportcontainers 6 zusammenwirkenden Verbindungselementen (nicht abgebildet) an dem ersten Teilbereich 5 der Baukammer 4 sind in einer Ausführungsform der Erfindung an dem Transportcontainer 6 und/oder an der entsprechenden Ankoppelfläche 22 der feststehenden Baukammer 5 auch Zentrierelemente, beispielsweise in Gestalt von Zentrierzapfen 23, vorgesehen zum Zentrieren des Transportcontainers 6 in Bezug auf den ersten Teilbereich 5 der Baukammer 4 während des Verbindens. Der Zentrierzapfen 23 greift in eine entsprechende Nut 24 an dem Transportcontainer ein. Soll der Transportcontainer 6 abgetrennt werden, wird die Flanschverbindung wieder gelöst.

Besonders vorteilhaft ist es, wenn der Transportcontainer 6 derart ausgebildet ist, daß mit der Herstellung der mechanischen Verbindung zu dem ersten Teilbereich 5 der Baukammer 4 zugleich auch eine elektrische und/oder thermische Verbindung mit dem ersten Teilbereich 5 der Baukammer 4 hergestellt wird. So sind beispielsweise an oder neben den Verbindungselementen 21 zur Herstellung der mechanischen Verbindung zwischen Transportcontainer 6 und erstem Teilbereich 5 der Baukammer 4 sich durch das Herstellen der mechanischen Verbindung selbsttätig verbindende elektrische Kontaktelemente (nicht abgebildet) vorgesehen derart, daß eine automatisierbare elektrische Ankopplung des Transportcontainers 6 an die Vorrichtung 1 möglich ist. Durch das Herstellen einer thermischen Anbindung wird sichergestellt, daß die erforderliche Betriebstemperatur möglichst schnell in beiden Teilbereichen der Baukammer 4, also sowohl in dem Transportcontainer 6, als auch in dem ersten Teilbereich 5 der Baukammer 4 vorherrscht.

Weist der Transportcontainer 6 wenigstens einen Temperatursensor (nicht abgebildet) und/oder eine Heiz- und/oder Kühleinrichtung (nicht abgebildet) auf, so ist das Temperieren des Behälters 7 auf besonders einfache Art und Weise möglich. Insbesondere ist auch ein Vorheizen des Behälters 7 außerhalb der Vorrichtung 1 möglich. Die Heiz- und/oder Kühleinrichtung ist vorzugsweise mit dem Temperatursensor gekoppelt zur automatischen Einstellung der erforderlichen Temperatur in dem Transportcontainer 6 bzw. in dem Behälter 7. Ein Vorheizen oder aber auch Kühlen des Behälters 7 im abgekoppelten Zustand, also unabhängig von der Vorrichtung 1, ist somit möglich. Da die Anschlüsse für die Heizung bzw. Kühlung und die Sensorik außerhalb der Baukammer 4 angeordnet sind, sind diese keiner Temperaturbelastung unterworfen und verschmutzen nicht.

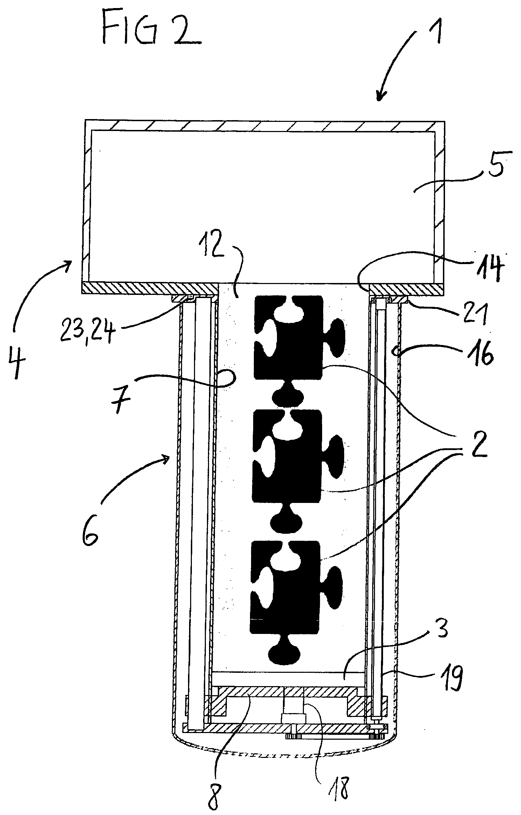

Bei einem typischen Arbeitsablauf wird der mit Objekten 2 gefüllte Transportcontainer 6, siehe Fig. 2, von der Vorrichtung 1 abgekoppelt und einem Prozeß zur Behandlung der in dem Behälter 7 des Transportcontainers 6 enthaltenen Objekte 2 unterworfen. Dabei kann es sich um eine Weiterbehandlung oder ein Aufbereitung der Objekte 2 handeln. Beispielsweise können die Objekte 2 aus dem Behälter 7 entnommen und von dem Sintermaterial 12 befreit werden oder aber sie verbleiben in dem Behälter 7 zum Abkühlen. Nach dem Abkühlen wird der Behälter 7 entleert und der Transportcontainer 6 kann für einen weiteren Herstellungsprozeß verwendet werden.

Unmittelbar nach dem Abkoppeln des Transportcontainers 6 kann ein anderer Transportcontainer 6 an die Vorrichtung 1 angekoppelt werden. Die Umrüstzeiten betragen nur wenige Minuten.

Das Ab- und Ankoppeln des Transportcontainers 6 erfolgt vorzugsweise automatisch und beispielsweise mit Hilfe von elektrisch angetriebenen Austauschsystemen (nicht abgebildet), welche die abgekoppelten Transportbehälter 6 selbstständig von der Vorrichtung 1 zu einem definierten Bestimmungsort transportieren, zu welchem Zweck eine entsprechend ausgebildete zentrale Steuereinheit (nicht abgebildet) oder dergleichen vorgesehen ist, auf die hier nicht näher eingegangen wird.

Weiterhin ist es möglich, daß der Transportcontainer 6 nach dem Abteilen von der Vorrichtung 1 mit einer zu der ersten Vorrichtung 1 baugleichen oder zumindest hinsichtlich des Transportcontainers 6 kompatiblen zweiten Vorrichtung 1 verbunden wird und dort die Erzeugung des Objektes 2 fortgesetzt oder ein weiteres Objekt teilweise oder vollständig erzeugt wird. So ist es beispielsweise auf eine ganz besonders einfache Art und Weise möglich, mehrkomponentige Objekte 2 aufzubauen oder Objekte 2 aus verschiedenen Materialien herzustellen, indem das Objekt 2 zwischen entsprechenden Vorrichtungen 1 hin- und hertransportiert wird. Da gemäß einer Ausführungsform der Erfindung das unnötige An- und Abkoppeln des Antriebs 18 für die Höhenverstellung der Plattform 8 entfällt, sind auch die wesentlichen Quellen für ungewünschte Ungenauigkeiten bei der Objekterzeugung beseitigt und ein Wechsel an eine zweite oder auch dritte Vorrichtung 1 und zurück ist ohne weiteres möglich. Aber auch ein Pausieren während der Erzeugung eines einzelnen Objektes 2 ist ohne weiteres realisierbar, beispielsweise wenn der Transportcontainer 6 nach dem Abteilen von der Vorrichtung 1 wieder mit der Vorrichtung 1 verbunden wird, ohne daß in der Zwischenzeit eine Fortsetzung der Objekterzeugung erfolgt. Statt dessen kann in der Zwischenzeit eine Bearbeitung oder Behandlung des Objektes erfolgen, beispielsweise eine Temperaturbehandlung.

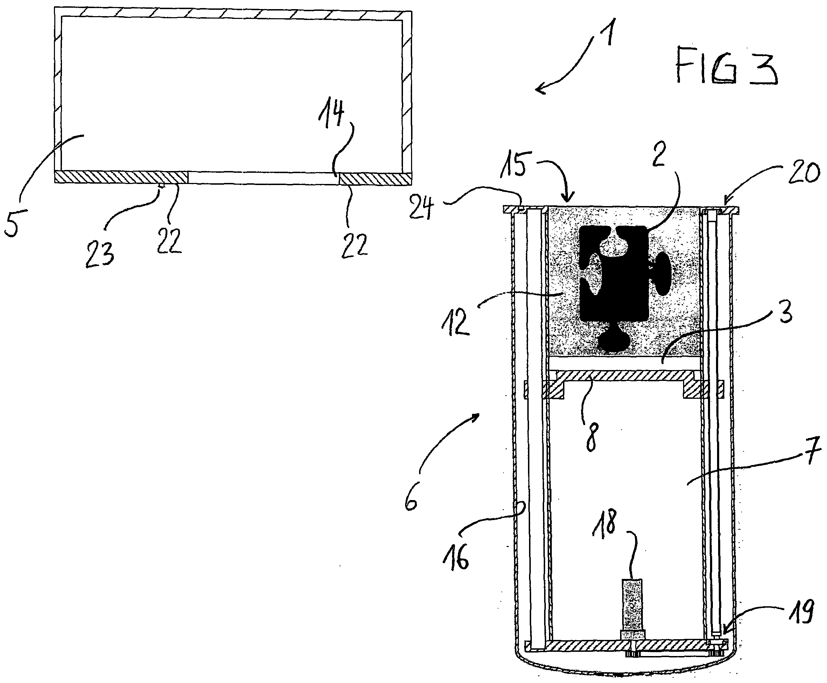

Der in Fig. 1 oder 2 dargestellte, nur teilweise gefüllte Transportcontainer 6 kann beispielsweise in einer Phase der Objektherstellung abgekoppelt, zu einer zweiten Vorrichtung 1 transportiert und an diese zweite Vorrichtung 1 angekoppelt werden zur Weitererzeugung des angefangenen Objektes (Fig. 1) oder aber zur Herstellung eines völlig anderen Objektes (Fig. 2). Ebenso wäre es möglich, den Transportcontainer 6 nach dem Abkoppeln und einer Herstellungspause wieder mit der ersten Vorrichtung 1 zu verbinden. Die Herstellung der in dem Transportcontainer 6 angeordneten Objekte 2 kann aber nach dem Abkoppeln auch durch einen Abkühlvorgang oder eine andere Weiter- bzw. Fertigbearbeitung fortgesetzt werden (Fig. 1, 2 oder 3). Mit anderen Worten kann der Transportcontainer 6 nach einem ersten Fertigungsauftrag ohne vorherige vollständige Entleerung an weiteren Stationen im Prozeßablauf genutzt werden.

Viele weitere Arbeitsabläufe sind möglich und ergeben sich teilweise durch Kombination der oben beschriebenen. Besonders vorteilhaft ist eine weitere Ausführungsform der Erfindung, bei der die Transportcontainer 6 Identifikationskennzeichnungen (nicht abgebildet) aufweisen, die sie von anderen Transportcontainern 6 unterscheiden. Dabei handelt es sich vorzugsweise um Kennzeichnungen zur drahtlosen Identifikation, wie beispielsweise RFID-Transponder. Sind auch die Vorrichtungen 1 mit entsprechenden Leseeinrichtungen (nicht abgebildet) versehen, und erfolgt eine Weitergabe der gelesenen Kennzeichnung an die Steuereinheit, ist eine automatische Erkennung der Transportcontainer 6 und eine vollautomatische Ansteuerung der Austauschvorgänge möglich. Damit läßt sich eine Massenproduktion von Bauteilen unter Verwendung von Schichtaufbauverfahren verwirklichen, beispielsweise in Anlagen mit mehreren Dutzend Vorrichtungen.

### Bezugszeichenliste

- 1: Vorrichtung
- 2: Objekt
- 3: Substrat
- 4: Baukammer
- 5: erster Teilbereich der Baukammer
- 6: Transportcontainer
- 7: Behälter
- 8: Plattform
- 9: Laser
- 10: Scanner
- 11: Laserstrahl
- 12: Beschichter
- 13: Baukammeröffnung
- 14: Behälteröffnung
- 15: Behälteröffnung
- 16: Wandung
- 17: Begrenzung der Baukammer
- 18: Antrieb
- 19: Höhenverstellmechanik
- 20: Containeroberseite
- 21: Verbindungselement
- 22: Kontaktfläche der Baukammer
- 23: Zentrierelement an der Baukammer
- 24: Zentrierelement an dem Transportcontainer

## Patentansprüche

1. Transportcontainer (6) zur Verwendung in einer Vorrichtung (1) zur Herstellung eines dreidimensionalen Objektes (2) durch selektives Verfestigen eines schichtweise aufgetragenen Aufbaumaterials, wobei die Vorrichtung (1) eine im Betriebszustand geschlossene Prozeßkammer (4) aufweist, in der das dreidimensionale Objekt (2) schichtweise erzeugt wird, wobei der Transportcontainer (6) einen Behälter (7) aufweist, in dem eine höhenverstellbare Plattform (8) angeordnet ist, auf der das dreidimensionale Objekt (2) schichtweise erzeugt wird, und wobei der Transportcontainer (6) als ein zweiter Teilbereich der Prozeßkammer (4) ausgebildet ist, der von einem ersten Teilbereich (5) der Prozeßkammer (4) abteilbar, im abgeteilten Zustand unabhängig von der Vorrichtung (1) handhabbar und zur Herstellung des Betriebszustandes der Vorrichtung (1) mit dem ersten Teilbereich (5) der Prozeßkammer (4) verbindbar ist, **dadurch gekennzeichnet dass**, der Transportcontainer (6) einen an einer Kontaktseite (20) des Transportcontainers (6) angebrachten und eine Öffnung (15) des Behälters (7) umgreifenden Flansch als Verbindungselement (21) zur Herstellung einer mechanischen Verbindung zu dem ersten Teilbereich (5) der Prozeßkammer (4) aufweist.

2. Transportcontainer (6) nach Anspruch 1, **dadurch gekennzeichnet, daß** er eine Einrichtung (18, 19) zur Höhenverstellung der Plattform (8) aufweist.

3. Transportcontainer (6) nach Anspruch 1 oder 2, **dadurch gekennzeichnet, daß** die Verbindungselemente (21) zugleich als Dichtungselemente ausgebildet sind zur Ausbildung einer zur Umgebung hin druckdichten Verbindung zwischen Transportcontainer (6) und erstem Teilbereich (5) der Prozeßkammer (4).

4. Transportcontainer (6) nach einem der Ansprüche 1 bis 3, **dadurch gekennzeichnet, daß** er derart ausgebildet ist, daß mit der Herstellung der mechanischen Verbindung zu dem ersten Teilbereich (5) der Prozeßkammer (4) zugleich auch eine elektrische und/oder thermische Verbindung mit dem ersten Teilbereich (5) der Prozeßkammer (4) hergestellt wird.

5. Transportcontainer (6) nach einem der Ansprüche 1 bis 4, **dadurch gekennzeichnet, daß** er wenigstens einen Temperatursensor und/oder eine Heiz- und/oder Kühleinrichtung aufweist zum Temperieren des Behälters (7).

6. Transportcontainer (6) nach einem der Ansprüche 1 bis 5, **dadurch gekennzeichnet, daß** er eine Identifikationskennzeichnung aufweist, die ihn von anderen Transportcontainern (6) unterscheidet.

7. Vorrichtung (1) zum Herstellen eines dreidimensionalen Objektes (2) durch selektives Verfestigen eines schichtweise aufgetragenen Aufbaumaterials, wobei die Vorrichtung (1) eine im Betriebszustand geschlossene Prozeßkammer (4) aufweist, in der das dreidimensionale Objekt (2) hergestellt wird, **dadurch gekennzeichnet, daß** die Prozeßkammer (4) einen ersten Teilbereich (5) und einen als Transportcontainer (6) nach einem der Ansprüche 1 bis 6 ausgebildeten zweiten Teilbereich aufweist.

8. Vorrichtung (1) nach Anspruch 7, **dadurch gekennzeichnet, daß** sie zur Herstellung einer mechanischen Verbindung mit dem Transportcontainer (6) mit Verbindungselementen (21) des Transportcontainers (6) zusammenwirkende Verbindungselemente aufweist.

9. Vorrichtung (1) nach Anspruch 7 oder 8, **dadurch gekennzeichnet, daß** sie eine Leseeinrichtung aufweist zur vorzugsweise automatischen Erkennung einer Identifikationskennzeichnung eines Transportcontainers (6).

10. Verfahren zur Herstellung eines dreidimensionalen Objektes (2) mittels einer Vorrichtung (1) zum selektiven Verfestigen eines schichtweise aufgetragenen Aufbaumaterials, wobei die Vorrichtung (1) eine im Betriebszustand geschlossene Prozeßkammer (4) aufweist, in der das dreidimensionale Objekt (2) hergestellt wird, **dadurch gekennzeichnet, daß** ein Transportcontainer (6) nach einem der Ansprüche 1 bis 6 nach der teilweisen oder vollständigen Erzeugung des Objektes (2) von einem ersten Teilbereich (5) der Prozeßkammer (4) abgeteilt und im abgeteilten Zustand unabhängig von der Vorrichtung (1) gehandhabt wird.

11. Verfahren nach Anspruch 10, **dadurch gekennzeichnet, daß** der Transportcontainer (6) nach dem Abteilen von der Vorrichtung (1) mit einer zweiten Vorrichtung verbunden wird und dort die Erzeugung des Objektes (2) fortgesetzt oder ein weiteres Objekt (2) teilweise oder vollständig erzeugt wird.

12. Verfahren nach Anspruch 10 oder 11, **dadurch gekennzeichnet, daß** der Transportcontainer (6) nach dem Abteilen von der Vorrichtung (1) wieder mit der Vorrichtung (1) verbunden wird, ohne daß in der Zwischenzeit eine Fortsetzung der Objekterzeugung erfolgt.

13. Verfahren nach Anspruch 11 oder 12, **dadurch gekennzeichnet, daß** der Transportcontainer (6) zwischen dem Abteilen und dem Wiederverbinden einem Prozeß zur Behandlung des in dem Behälter (7) des der Transportcontainers (6) enthaltenen Objektes (2) unterworfen wird.

## Claims

1. A transport container (6) for use in an apparatus (1) for manufacturing a three-dimensional object (2) by selective solidification of a build material applied in layers,
wherein the apparatus (1) comprises a process chamber (4), closed in the operating state, in which the three-dimensional object (2) is produced in layers,
wherein the transport container (6) comprises a receptacle (7) in which is arranged a vertically displaceable platform (8) on which the threedimensional object (2) is produced in layers; and
wherein the transport container (6) is embodied as a second section of the process chamber (4) that can be segregated from a first section (5) of the process chamber (4), in the segregated state can be handled independently of the apparatus (1), and can be connected to the first section (5) of the process chamber (4) in order to establish the operating state of the apparatus (1),
**characterized in that** the transport container (6) comprises a flange as connecting element (21) for establishing a mechanical connection to the first section (5) of the process chamber (4), said flange being mounted on a contact side (20) of the transport container (6) and fitted around an opening (15) of receptacle (7).

2. The transport container (6) according to Claim 1, **characterized in that** it comprises a device (18, 19) for vertical displacement of the platform (8).

3. The transport container (6) according to Claim 1 or 2, **characterized in that** the connecting elements (21) are simultaneously embodied as sealing elements in order to constitute a connection, pressure-tight with respect to the surrounding environment, between the transport container (6) and the first section (5) of the process chamber (4).

4. The transport container (6) according to one of Claims 1 to 3, **characterized in that** it is embodied in such a way that along with establishment of the mechanical connection to the first section (5) of the process chamber (4), an electrical and/or thermal connection to the first section (5) of the process chamber (4) is also simultaneously established.

5. The transport container (6) according to one of Claims 1 to 4, **characterized in that** it comprises at least one temperature sensor and/or a heating and/or cooling device for temperature control of the receptacle (7).

6. The transport container (6) according to one of Claims 1 to 5, **characterized in that** it comprises an identifying element that distinguishes it from other transport containers (6).

7. An apparatus (1) for manufacturing a three-dimensional object (2) by selective solidification of a build material applied in layers,
wherein the apparatus (1) comprises a process chamber (4), closed in the operating state, in which the three-dimensional object (2) is manufactured,
**characterized in that** the process chamber (4) comprises a first section (5) and a second section embodied as a transport container (6) according to one of Claims 1 to 6.

8. The apparatus (1) according to Claim 7, **characterized in that** it comprises, in order to establish a mechanical connection with the transport container (6), connecting elements coacting with connecting elements (21) of the transport container (6).

9. The apparatus (1) according to Claim 7 or 8, **characterized in that** it comprises a reading device for preferably automatic detection of an identifying element of a transport container (6).

10. A method for manufacturing a three-dimensional object (2) by means of an apparatus (1) for selective solidification of a build material applied in layers, wherein the apparatus (1) comprises a process chamber (4) that is closed in the operating state and in which the three-dimensional object (2) is manufactured, **characterized in that**, after partial or complete production of the object (2), a transport container (6) according to one of Claims 1 to 6 is segregated from a first section (5) of the process chamber (4) and, in the segregated state, is handled independently of the apparatus (1).

11. The method according to Claim 10, **characterized in that**, after segregation from the apparatus (1), the transport container (6) is connected to a second apparatus, where production of the object (2) is continued or a further object (2) is partly or entirely produced.

12. The method according to Claim 10 or 11, **characterized in that**, after segregation from the apparatus (1), the transport container (6) is reconnected to the apparatus (1) with no continuation of object production in the meantime.

13. The method according to Claim 11 or 12, **characterized in that**, the transport container (6) is subjected, between segregation and reconnection, to a process for treating the object (2) contained in the receptacle (7) of the transport container (6).

## Revendications

1. Conteneur de transport (6) à utiliser dans un dispositif (1) pour fabriquer un objet tridimensionnel (2) par fixation sélective d'un matériau structurel appliqué par couches, le dispositif (1) comportant une chambre de traitement (4) fermée dans l'état de fonctionnement dans laquelle l'objet tridimensionnel (2) est produit par couches, le conteneur de transport (6) comportant un bac (7) dans lequel une plateforme (8) mobile en hauteur est disposée et sur laquelle l'objet tridimensionnel (2) est produit par couches et le conteneur de transport (6) étant réalisé sous la forme d'une deuxième zone partielle de la chambre de traitement (4) pouvant être séparée d'une première zone partielle (5) de la chambre de traitement (4), pouvant être manipulée dans l'état séparé indépendamment du dispositif (1) et pouvant être reliée à la première zone partielle (5) de la chambre de traitement (4) pour permettre l'état de fonctionnement du dispositif (1), **caractérisé en ce que** le conteneur de transport (6) comporte une bride disposée au niveau d'un côté de contact (20) du conteneur de transport (6) et emboîtant autour une ouverture (15) du bac (7) réalisée sous la forme d'un élément de liaison (21) pour fabriquer une liaison mécanique avec la première zone partielle (5) de la chambre de traitement (4).

2. Conteneur de transport (6) selon la revendication 1, **caractérisé en ce qu'**il comporte un dispositif (18, 19) de déplacement en hauteur de la plateforme (8).

3. Conteneur de transport (6) selon la revendication 1 ou 2, **caractérisé en ce que** les éléments de liaison (21) sont réalisés simultanément sous la forme d'éléments d'étanchéité pour former une liaison étanche à la pression par rapport à l'environnement entre le conteneur de transport (6) et la première zone partielle (5) de la chambre de traitement (4).

4. Conteneur de transport (6) selon l'une quelconque des revendications 1 à 3, **caractérisé en ce qu'**il est réalisé de telle sorte qu'en même temps que la liaison mécanique s'établit par rapport à la première zone partielle (5) de la chambre de traitement (4), une liaison électrique et/ou thermique s'établit avec la première zone partielle (5) de la chambre de traitement (4).

5. Conteneur de transport (6) selon l'une quelconque des revendications 1 à 4, **caractérisé en ce qu'**il comporte au moins un capteur de température et/ou un dispositif de chauffage et/ou de refroidissement pour tempérer le bac (7).

6. Conteneur de transport (6) selon l'une quelconque des revendications 1 à 5, **caractérisé en ce qu'**il comporte une caractéristique d'identification le différenciant des autres conteneurs de transport (6).

7. Dispositif (1) pour fabriquer un objet tridimensionnel (2) par fixation sélective d'un matériau structurel appliqué par couches, le dispositif (1) comportant une chambre de traitement (4) fermée dans l'état de fonctionnement dans laquelle l'objet tridimensionnel (2) est fabriqué, **caractérisé en ce que** la chambre de traitement (4) comporte une première zone partielle (5) et une deuxième zone partielle réalisée sous la forme du conteneur de transport (6) selon l'une quelconque des revendications 1 à 6.

8. Dispositif (1) selon la revendication 7, **caractérisé en ce qu'**il comporte, pour établir une liaison mécanique avec le conteneur de transport (6), des éléments de liaison interagissant avec les éléments de liaison (21) du conteneur de transport (6).

9. Dispositif (1) selon la revendication 7 ou 8, **caractérisé en ce qu'**il comporte un dispositif de lecture pour identifier de préférence automatiquement une caractéristique d'identification d'un conteneur de transport (6).

10. Procédé pour fabriquer un objet tridimensionnel (2) à l'aide d'un dispositif (1) de fixation sélective d'un matériau structurel appliqué par couches, le dispositif (1) comportant une chambre de traitement (4) fermée dans l'état de fonctionnement dans laquelle l'objet tridimensionnel (2) est fabriqué, **caractérisé en ce qu'**un conteneur de transport (6) selon l'une quelconque des revendications 1 à 6 est séparé d'une première zone partielle (5) de la chambre de traitement (4) après la réalisation totale ou partielle de l'objet (2) et manipulé indépendamment du dispositif (1) dans l'état séparé.

11. Procédé selon la revendication 10, **caractérisé en ce que** le conteneur de transport (6) est relié, après séparation du dispositif (1), à un deuxième dispositif et que la réalisation de l'objet (2) s'y poursuit ou qu'un objet (2) supplémentaire est totalement ou en partie produit.

12. Procédé selon la revendication 10 ou 11, **caractérisé en ce que** le conteneur de transport (6) est de nouveau relié, après séparation du dispositif (1), au dispositif (1) sans que la réalisation de l'objet se soit poursuivie entre temps.

13. Procédé selon la revendication 11 ou 12, **caractérisé en ce que** le conteneur de transport (6) est soumis, entre la séparation et le rétablissement de la liaison, à un processus de traitement destiné à traiter l'objet (2) contenu dans le bac (7) du conteneur de transport (6).
